# EUROPEAN PATENT APPLICATION

(11) **EP 2 357 584 A1**
(43) Date of publication of application: **17.08.2011**
(21) Application number: 10195128.3
(22) Date of filing: 15.12.2010
(51) Int. Cl.: G06F 21/00

(54) **Host apparatus, image forming apparatus, and method of managing security settings.**

(30) Priority: 01.02.2010 KR 20100009144
(71) Applicant: Samsung Electronics Co., Ltd., Yeongtong-gu Suwon-si, Gyeonggi-do (KR)
(72) Inventor: Oh, Byung-woon, Gyeonggi-do (KR); Bae, Sung-hoon, Gyeonggi-do (KR)
(74) Representative: Bruce, Alexander Richard Henry

(57) **Abstract**

An image forming apparatus is provided. The image forming apparatus includes a storage unit which stores security settings information of the image forming apparatus, an image forming unit to perform an image forming job, a function management unit which controls the functions of the image forming unit, a communications interface unit which is connected to a host apparatus, and a security settings management unit which transmits stored security settings information through the communications interface unit and changes stored security settings information according to a packet of changing the received security settings, if a packet of changing the security settings is received from the host apparatus through the communications interface unit.

## Description

The present invention relates to a host apparatus, an image forming apparatus, and a method of managing security settings, and more particularly, to a host apparatus, an image forming apparatus, and a method of managing security settings which may manage security settings of a plurality of image forming apparatuses collectively according to a fixed security policy.

Generally, an image forming apparatus refers to an apparatus to print print data, which is generated from a terminal apparatus, such as a computer, on recording paper. An example of the image forming apparatus is a copy machine, a printer, a fax machine, and a Multi-Function Peripheral (MFP) which combines the functions of the aforementioned apparatuses into one apparatus.

Recently, security has become important in society. Therefore, more and more corporations and government agencies enable network security, such as SSL, IPSec, Authlx, Wireless Security, IP Filtering, and Mac Filtering and enable network security of an image forming apparatus, such as Doc Box Sharing, IPP, User Authentication, Job Accounting, Secure Scan, and Secure Fax.

However, to check security settings of an image forming apparatus and implement the security settings, a user has been inconvenienced in checking a user interface window manually and connecting to WEB-UI to check and change the security settings. In particular, corporations and government agencies have to check security settings of a plurality of image forming apparatuses, and therefore, the administrators have to check and implement security settings status of each image forming apparatus manually. This is inconvenient for users.

Exemplary embodiments address at least the above problems and/or disadvantages and other disadvantages not described above. Also, the exemplary embodiments are not required to overcome the disadvantages described above, and an exemplary embodiment of the present invention may not overcome any of the problems described above.

A host apparatus, an image forming apparatus, and a method of managing security settings are provided to manage security settings of a plurality of image forming apparatuses in a comprehensive way according to a security policy.

The foregoing and/or other aspects are achieved by providing a host apparatus which is connected to at least one of a plurality of image forming apparatuses, the host apparatus including a user interface unit where a security policy for at least one of the image forming apparatuses is set, a storage unit which stores the set security policy, a communications interface unit which requests security settings for at least one of the image forming apparatuses and receives corresponding security settings information from at least one of the image forming apparatuses, and a control unit which performs a security check on at least one of the image forming apparatuses by comparing the security settings information received from the at least one of the image forming apparatuses with the stored security policy.

The host apparatus may further include a security settings action unit which transmits a packet of changing security settings to change a violated security settings item to an image forming apparatus violating the stored security policy when it is determined that at least one security settings item of an image forming apparatus violates the stored security policy according to the security check result of the at least one image forming apparatus.

The user interface unit may display a security check result of the at least one of the image forming apparatuses.

The host apparatus may further include a security check result announcement unit, which notifies a security check result of at least one of the image forming apparatuses to an administrator.

The host apparatus may further include a security policy management unit which extracts a security settings item to conduct a security check according to the stored security policy, and the control unit may perform a security check on at least one of the image forming apparatuses by comparing the extracted security settings item with the security settings information received from the image forming apparatus.

The security policy may include time information to perform a security check, and the control unit may perform a security check on at least one of the image forming apparatuses according to the time information.

The security policy may include at least one of security settings items among a user authentication, a job accounting, an IPSec, a 802.1x, a security fax, an IP filter, a Mac filter, a SSL support and a direct printing.

The foregoing and/or other aspects are achieved by providing an image forming apparatus which is connected to a host apparatus, the image forming apparatus including a storage unit which stores security settings information of the image forming apparatus, an image forming unit which performs an image forming job, a function management unit which controls the functions of the image forming unit according to the stored security settings information, a communications interface unit which is connected to the host apparatus, and a security settings management unit which transmits the stored security settings information to the host apparatus through the communications interface unit, and changes the stored security settings information according to a received packet of changing security settings, if a packet of changing security settings is received from the host apparatus through the communications interface unit.

The security settings management unit may transmit the stored security settings information to the host apparatus through the communications interface unit, if a packet of requesting security settings information is received from the host apparatus through the communications interface unit.

The security settings management unit transmits the stored security settings information regularly to the host apparatus through the communications interface unit.

The security settings management unit transmits a changed result of the security settings through the communications interface unit.

The foregoing and/or other aspects are achieved by providing a method of managing security settings of at least one of the image forming apparatuses from a host apparatus, which may be connected to at least one of image forming apparatuses, the method including setting a security policy of at least one of the image forming apparatuses, storing the set security policy in the host server, receiving corresponding security settings information after requesting security settings of the at least one of the image forming apparatuses, and performing a security check on at least one of the image forming apparatuses by comparing the security settings information received from the at least one of the image forming apparatuses with the stored security policy.

The method may further include transmitting a packet of changing security settings to change a violated security settings item to the concerned image forming apparatus, if an image forming apparatus which violated the stored security policy is existent according to the security check result of the at least one of the image forming apparatuses.

The method may further include displaying a security check result of the at least one of the image forming apparatuses.

The method may further include notifying a security check result on at least one of the image forming apparatuses to an administrator.

The method may further include extracting a security settings item to conduct a security check according to the stored security policy, and the performing a security check performs a security check on at least one of the image forming apparatuses by comparing the extracted security settings item with the stored security policy received from the at least one of the image forming apparatuses.

The security policy may display time information to perform a security check, and the performing a security check performs a security check on at least one of the image forming apparatuses according to the time information.

The security policy may include at least one of security settings items among a user authentication, a job accounting, an IPSec, a 802.1x, a security fax, an IP filter, a Mac filter, a SSL support and a direct printing.

The foregoing and/or other aspects are achieved by providing a method of managing a security policy of image forming apparatus which is connected to a host apparatus, the method includes transmitting pre-stored security settings information of the image forming apparatus to the host apparatus, receiving a security settings packet from the host apparatus, determining the type of the received security settings packet, changing the security settings information according to the received packet of changing the security settings, if the received security setting packet is a packet of changing security settings, and performing the functions of the image forming apparatus according to the changed security settings information.

The transmitting of the security settings information may transmit the pre-stored security settings information to the host apparatus, if a request packet of security settings information is received from the host apparatus through the communications interface unit.

The transmitting of the security settings information may transmit the pre-stored security settings information to the host apparatus regularly.

The method may further include transmitting the changed result of the security settings to the host apparatus.

The foregoing and/or other aspects are achieved by providing a method of managing a security policy for at least one image forming apparatus connected to a host apparatus, the method including: transmitting security settings information to the host apparatus in response to a request to transmit security settings; receiving a change request packet of changing the security settings information if it determined, based on the transmitted security setting information in relation to a security policy at the host apparatus, that at least one security settings item of the security settings of the at least one image forming apparatus violates the security policy of the host apparatus; and changing the security settings based on the change request packet.

The method further includes transmitting a change result packet indicating the changed result of the security settings to the host apparatus.

The security settings of the at least one image forming apparatus may be set by a user through a user interface at the at least one image forming apparatus.

The security settings of the at least one image forming apparatus may be automatically set according to a security policy received from the host apparatus.

The above and/or other aspects of the present invention will be more apparent by describing certain exemplary embodiments of the present invention with reference to the accompanying drawings, in which:
FIG. 1 is a block diagram of an image forming apparatus according to an exemplary embodiment;
FIG. 2 is a block diagram of a detailed configuration of the host apparatus of FIG. 1;
FIG. 3 is a block diagram of a detailed configuration of the image forming apparatus of FIG. 1;
FIGS. 4 to 20 are various examples of a user interface window which may be displayed on the host apparatus of FIG. 1;
FIG. 21 is a flowchart to explain a method of managing security settings of a host apparatus according to an exemplary embodiment; and
FIG. 22 is a flowchart to explain a method of managing security settings of an image forming apparatus according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention may be carried out without those specifically defined matters. Also, well-known functions or constructions are not described in detail since they would obscure the invention with unnecessary detail.

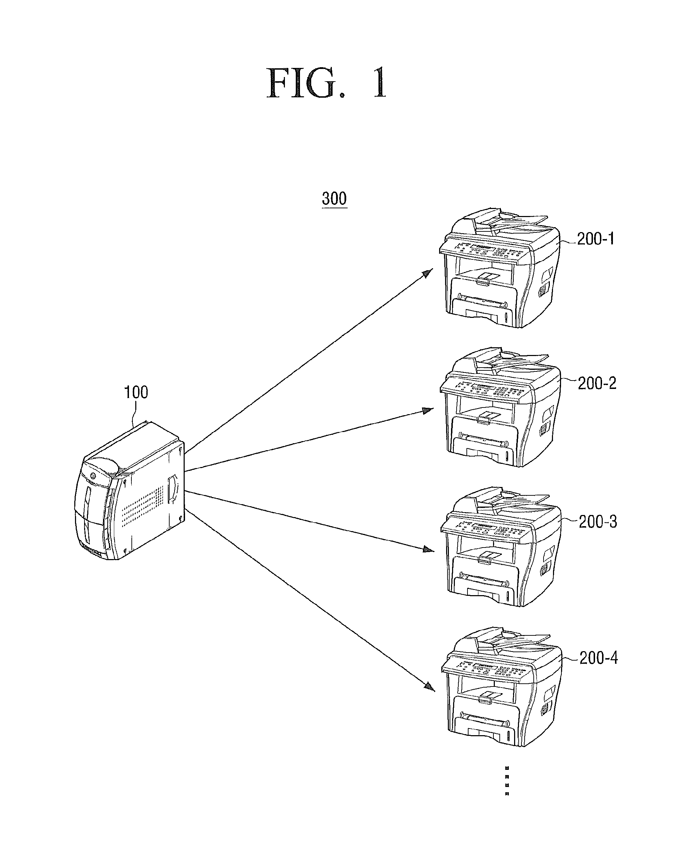

FIG. 1 is a block diagram of an image forming apparatus according to an exemplary embodiment.

With reference to FIG. 1, an image forming system 300 includes a host apparatus 100 and a plurality of an image forming apparatuses 200.

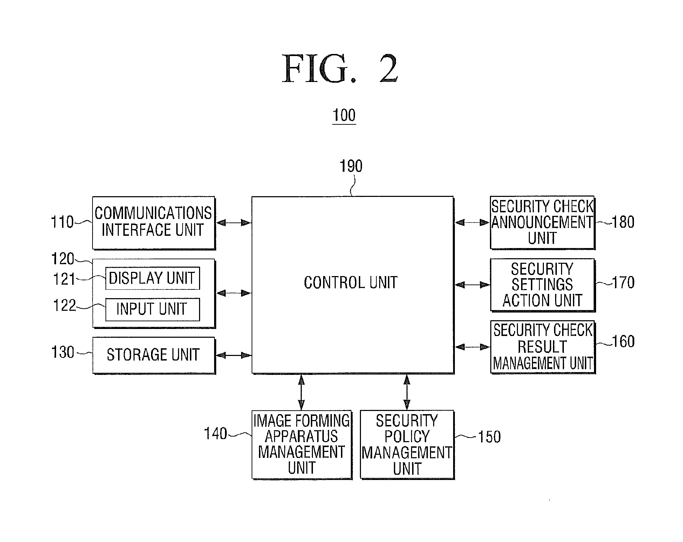

The host apparatus 100 is connected to at least one of the image forming apparatuses 200 and checks security settings fixed in the at least one image forming apparatus 200 according to a fixed security policy. The host apparatus 100 may change security settings of the image forming apparatus 200, which has security settings violating the security policy. Detailed configuration and actions of the host apparatus 100 will be explained below with reference to FIG. 2. The host apparatus 100 may be a management server in the form of a server.

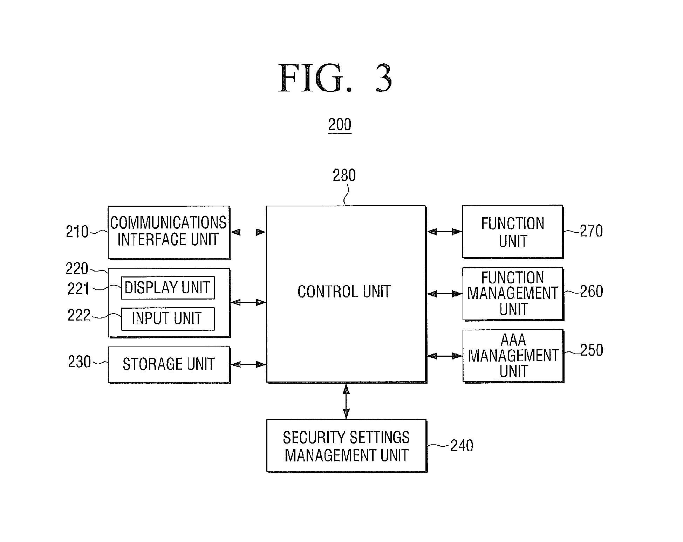

The image forming apparatus 200 is connected to the host apparatus 100. The image forming apparatus 200 may transmit fixed security settings in the image forming apparatus 200 to the host apparatus 100 according to a request from the host apparatus 100. The image forming apparatus 200 may change security settings of the image forming apparatus 200 according to a change command of security settings from the host apparatus 100. Detailed configuration and actions of the image forming apparatus 200 will be explained below with reference to FIG. 3.

FIG. 1 illustrates that four image forming apparatuses 200-1, 200-2, 200-3, and 200-4 are directly connected to the host apparatus 100. However, more or less than four image forming apparatuses may be connected to the host apparatus 100, and the image forming apparatuses may be connected directly or indirectly using a router. FIG. 1 illustrates that the four image forming apparatuses 200-1, 200-2, 200-3, and 200-4 (200-l...n) have the same configuration, but each of the image forming apparatus 200-1...n may be one of the following: a copy machine, a printer, such as a laser printer, ink jet printer, a fax machine, and a MFP which combines the functions of the aforementioned apparatuses into one.

FIG. 2 is a block diagram illustrating a configuration of the host apparatus 100 according to an exemplary embodiment.

Referring to FIG. 2, the host apparatus 100 includes a communications interface unit 110, a user interface unit 120, a storage unit 130, an image forming apparatus management unit 140, a security check result management unit 150, a security policy management unit 160, a security settings action unit 170, a security check announcement unit 180, and a control unit 190.

The communications interface unit 110 is designed to connect the host apparatus 100 to the plurality of image forming apparatuses 200-1, 200-2, 200-3, 200-4, .... The communications interface unit 100 may be connected wired or wirelessly through a Local Area Network (LAN) and the Internet and through a Universal Serial Bus (USB) port.

The communications interface unit 110 may receive each of security settings information set in each of the plurality of image forming apparatuses 200-1, 200-2, 200-3, 200-4, .... In detail, the communications interface unit 110 may transmit an information request packet of security settings, which requests an information transmission of each of the security settings, to a plurality of image forming apparatuses 200-1, 200-1, 200-3, 200-4,..., and in response receive security settings information from each of the image forming apparatuses 200-1, 200-2, 200-3, 200-4

The communications interface unit 110 may transmit a packet of changing security settings to an image forming apparatus 200 which has an item of violating security settings. In detail, the communications interface unit 110 may transmit a packet of changing security settings to an image forming apparatus 200, which has security settings violating a security policy, in order to change the security settings according to the control from the control unit 190 and the security settings action unit 170. The two units will be described below.

The communications interface unit 110 may receive a result of changing security settings from the concerned image forming apparatus 200 in response to transmission of the packet of changing security settings. The communications interface unit 110 may retransmit the packet of changing security settings, if a result of changing security settings is not received from the concerned image forming apparatus during a predetermined time. The communications interface unit 110 may retransmit the packet of changing security settings a predetermined number of times.

The user interface unit 120 includes diverse functional keys, which allow a user to set or choose diverse functions of the host apparatus 100 and display various information provided by the host apparatus 100. The user interface unit 120 may be realized as an apparatus, such as a touchpad, where an input and an output may be realized at the same time. Moreover, the user interface unit 120 may be realized by combining an input unit 122, such as a mouse and a keyboard, and a display unit 121, such as a CRT monitor, a LCD monitor and a LED.

The user interface unit 120 may display a user interface (UI) window to receive a fixed security policy on a plurality of image forming apparatuses, and may receive a security policy through the displayed user interface window. The security policy recited herewith is a congregation of security settings items, which are to be applied commonly in a plurality of image forming apparatuses. The security policy may include an item of security settings such as a User Authentication, a Job Accounting, an IPSec, a 802.1x, a Security Fax, an IP filter, a Mac Filter, a SSL support, and a Direct Printing.

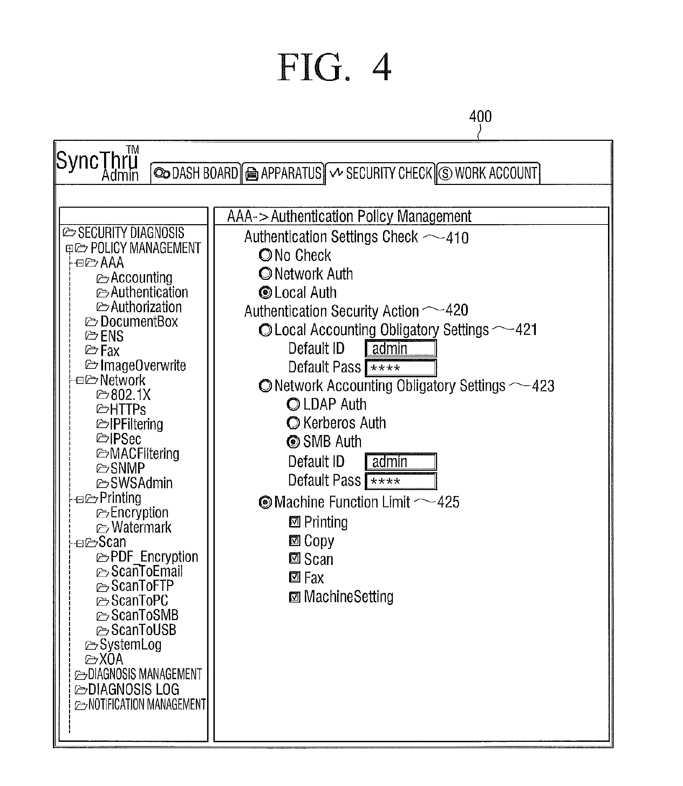

The user interface unit 120 may display a result of the security settings. In detail, the user interface unit 120 may display a user interface window displaying information, such as a list or a number of image forming apparatuses in which a security check is performed, a list or a number of image forming apparatuses in which a violation is found in a security check result, and a step to be taken for the violating image forming apparatus. With regard to a window of the user interface unit 120 to receive a fixed security policy and a window of the user interface unit 120 displaying a security check, FIGS. 4 to 20 will be described below.

The storage unit 130 may store the fixed security policy. In detail, the storage unit 130 may store the set security policy through the user interface unit 120. The storage unit 130 may store information or a list of a plurality of image forming apparatuses 200-1, 200-2, 200-3, 200-4,.... In detail, the storage unit 130 may store apparatus information, including an IP address, a serial number, a model name of a plurality of image forming apparatuses 200-1, 200-2, 200-3, 200-4,..., respectively, etc.

The storage unit 130 may store security settings information. In detail, the storage unit 130 may store received information of security settings from a plurality of image forming apparatuses 200-1, 200-2, 200-3, 200-4,... through the communications interface unit 110. The storage unit 130 may store a result of a security check. In detail, the storage unit 130 may store a result of a security check performed by the control unit 190, which will be explained below, and store a result of a security settings action performed by the security settings action unit 170. The storage unit 130 may store such a result of the security check in a log form.

The storage unit 130 may be realized as a storage medium inside the host apparatus 100 and an outside storage medium. For example, the storage unit 130 may be realized as a Removable Disk, including a USB memory, a storage medium connected to a host, and a web-server through a network.

The image forming apparatus management unit 140 manages information on a plurality of image forming apparatuses 200-1...n. In detail, the image forming apparatus management unit 140 receives information of a fixed image forming apparatus 200, which is to be managed by the host apparatus 100, through the user interface unit 120. The storage unit 130 may store apparatus information, such as an IP address, a serial number, a model name of the fixed image forming apparatus 200, etc..

The image forming apparatus management unit 140 may regularly search an image forming apparatus 200 connected to the host apparatus 100 using the communications interface unit 110, and update the above-mentioned apparatus information.

The security policy management unit 150 extracts a security settings item, when a security check is to be performed, according to a stored security policy. In detail, the security policy management unit 150 may distinguish an item, which needs a security check, and an item, which does not need a security check, according to a fixed and a stored security policy.

The security check result management unit 160 manages results of security checks and security actions on a plurality of image forming apparatuses 200-a1...n. In detail, the security check result management unit 160 may store a security check result of the security policy management unit 150 and the control unit 190 on a check-time basis. For example, an image forming apparatus 200 violating a security check, a violated item, and the result when an action is automatically performed may be stored in the storage unit 130.

With regard to an image forming apparatus 200 violating a stored security policy, the security settings action unit 170 may generate a packet of changing security settings to change an item violating security settings and control the communications interface unit 110 to transmit the generated packet of changing the security setting to the concerned image forming apparatus 200. The security settings action unit 170 may notify a performance of changing the security settings to the security check result management unit 160, if a changed result of security settings is transmitted from the concerned image forming apparatus through the communications interface unit 110.

The security check announcement unit 180 may notify results of security checks on a plurality of image forming apparatuses 200-1...n to an administrator through either an e-mail or a text message, for example. In detail, the security check announcement unit 180 may receive a method and an address to notify a security check result, for example, an e-mail address and SMS address, from a user interface unit 120 and store such information in the storage unit 130.

The security check announcement unit 180 may receive a completion and a result of security check in detail from the security check result management unit 160 and notify a completion and the result to the pre-stored address in the pre-stored method. The security check announcement unit 180 may notify a security check result using an outside mail server or an outside SMS transmit server, for example. Also, the security check announcement unit 180 may notify the security check result directly using a wireless module located within the unit, for example.

The control unit 190 may control each configuration included in the host apparatus 100. In detail, the control unit 190 may control the user interface unit 120 to display a user interface window to have a fixed security policy from a user. If a policy is fixed through the user interface unit 120, the fixed policy may be stored in the storage unit 130.

The control unit 190 may perform a security check according to time information, which is a timing of performing a security check and a preset period, or a security check command of a user. In detail, the control unit 190 may control the image forming apparatus management unit 140 and the communications interface unit 110 to receive the information of security settings from a plurality of image forming apparatuses 200-1...n.

The control unit 190 may check an item violating a security policy among security settings fixed in a plurality of image forming apparatuses 200-1...n by comparing a security settings information received from each image forming apparatus with a stored security policy. In detail, the control unit 190 may compare security settings information received from each image forming apparatus with a security settings item extracted from the security policy management unit 150, and search an image forming apparatus 200 violating the extracted security settings item.

The control unit 190 may generate a packet of changing security settings to change an item violating a security settings item and control the security settings action unit 170 and the communications interface unit 110 to transmit the generated packet of changing to the concerned image forming apparatus 200, if a result of a security check on a plurality of image forming apparatuses 200-1...n finds that an image forming apparatus 200 violating the security policy is existent. The control unit 190 may only display an image forming apparatus 200 violating a security policy and a security settings item violating the security policy within the concerned image forming apparatus 200. A security action, which has been described above, may be performed according to the choice of the user.

The control unit 190 may send a security check result and a result of security action to the security check result management unit 160 to store the security check result and the result of security action. The control unit 190 may send a security check result and a result of security action to the security check announcement unit 180 to notify the security check result and the result of security action.

As such, the host apparatus 100 according to an exemplary embodiment may perform a security check on a plurality of image forming apparatuses in a comprehensive way and perform a security action automatically in response to a result of a security check. Therefore, the user may lessen his/her difficulty to connect each image forming apparatus repeatedly and check and take actions for the status of security settings. Even if a security policy on a plurality of image forming apparatuses is changed, a user or an administrator may change only a security policy in the host apparatus and change the security settings on the plurality of image forming apparatuses easily.

FIG. 1 illustrates an example of performing a security check on a plurality of image forming apparatuses, but a security check may be performed on one image forming apparatus.

FIG. 3 is a block diagram of a detailed configuration of the image forming apparatus according to an exemplary embodiment.

FIG. 3 illustrates that the image forming apparatus 200 includes a communications interface unit 210, a user interface unit 220, a storage unit 230, a security settings management unit 240, a management unit of Account, Authentication, Authorization (AAA) 250, a function management unit 260, a function unit 270, and a control unit 280.

The communications interface unit 210 is generated to connect the image forming apparatus 200 to the host apparatus 100, and may be connected through a LAN, the Internet, and a USB port, for example. The communications interface unit 210 may be connected to a print control terminal (not illustrated), for example.

The communications interface unit 210 may receive a request packet of security settings information from the host apparatus 100. In detail, the communications interface unit 210 may receive a request packet of security settings information which requests transmitting information of security settings set from the host apparatus 100. If the request packet of security settings is received, the security settings set in the image forming apparatus 200 may be transmitted to the host apparatus 100 as security settings information. Even if the request packet of security settings is not received, the security settings information may be transmitted to the host apparatus 100 at every preset period.

The communications interface unit 210 may receive a packet to change security settings. In detail, the communications interface unit 210 may receive a packet to change security settings from the host apparatus 100, if an item violating security settings in the host apparatus 100 is fixed in the image forming apparatus 200. If the packet to change security settings is received, the communications interface unit 210 may send the received packet to change security settings to the security settings management unit 240.

The communications interface unit 210 may transmit a result of changing security settings to the host apparatus 100 in response to the received packet to change security settings mentioned above.

The user interface unit 220 includes many functional keys through which a user may fix or choose various functions supported by the image forming apparatus 200, and displays various information provided by the image forming apparatus 200. The user interface unit 220 may be realized as an apparatus, such as a touchpad, through which an input and output may be realized at the same time. Moreover, the user interface unit 120 may be realized by combining an input unit 222, such as a mouse and a keyboard, for example, and a display unit 221, such as a CRT monitor, a LCD monitor and an LED, for example.

The user interface unit 220 may display a user interface window to receive an input of security settings on the image forming apparatus 200, and security settings may be input through the displayed window of the user interface.

The user interface unit 220 may display a change of security settings in the image forming apparatus 200, if a packet to change security settings is received from the host apparatus 100.

The storage unit 230 may store fixed security settings. In detail, the storage unit 230 may store the fixed security settings through the user interface unit 220. The storage unit 230 may store security settings when a violated item of security settings is changed through the security settings management unit 240.

The storage unit 230 may be realized as a storage medium inside the host apparatus 200 and an outside storage medium. For example, the storage unit 230 may be realized as a Removable Disk, including a USB memory, a storage medium connected to a host, and a web-server through a network, for example.

The security settings management unit 240 transmits stored information of security settings to the host apparatus 100 through the communications interface unit 210. In detail, the security settings management unit 240 may transmit information of the stored security settings in the storage unit 230 through the communications interface unit 210, if a packet of requesting security settings information is received from the host apparatus 100 through the communications interface unit 210 or if the preset period has passed.

The security settings management unit 240 manages security settings of the image forming apparatus 200. In detail, the security settings management unit 240 may receive fixed security settings through the user interface unit 220 and store them in the storage unit 230. The security settings management unit 240 may change security settings if a packet of changing security settings is received from the host apparatus 100. In detail, the security settings management unit 240 may change a security settings item violating security policy into a security settings item according to the received packet of changing security settings, when the packet of changing security settings is received from the communications interface unit 210.

The security settings management unit 240 may transmit a result of changing security settings to the host apparatus 100. In detail, the security settings management unit 240 may transmit a result of changing security settings to the host apparatus 100 through the communications interface unit 210, if a change packet of security settings is received thus changing security settings.

The security settings management unit 240 provides changed security settings for the Account, Authentication, Authorization (AAA) management unit 250 and the control unit 280, and allows the image forming apparatus 200 to perform a service according to the changed security settings.

The AAA management unit 250 manages security settings related to account, authentication and authorization according to security settings of the image forming apparatus 200. In detail, the AAA management unit 250 manages security settings related to account, authentication and authorization among the security settings of the image forming apparatus 200. If a packet of changing security settings received from the host apparatus 100 is related to an item of security settings such as account, authentication, authorization, security settings related to account, authentication and authorization may be changed according to a control of the security settings management unit 240.

The function unit 270 performs functions supported by the image forming apparatus 200 and may include an image forming unit which performs an image forming job, a scan unit which performs a scan job, and a fax unit which performs a fax job.

The function management unit 260 may manage security settings according to the function of the function unit 270 and may include an image forming management unit, a scan management unit, and a fax management unit. For example, the image forming management unit may manage security settings related to a print function of the image forming apparatus 200, whether or not a direct print function is used. The scan management unit may manage security settings related to a scan function of the image forming apparatus 200, whether or not a scan function is used. The illustrated examples show that the security settings management unit 240, the AAA management unit 250, and the function management unit 260 are a separated configuration, but the functions of the AAA management unit 250, and the function management unit 260 may be included in the security settings management unit 240.

The control unit 280 may control each configuration included in the image forming apparatus 200. In detail, the control unit 280 may control the user interface unit 220 to receive fixed security settings from a user, and store fixed security settings in the storage unit 230, if security settings are fixed through the user interface unit 220. Security settings may be realized as a form of fixing the security settings through the user interface unit 220 and of fixing security settings of the image forming apparatus 200 by receiving a security policy from the host apparatus 100.

The control unit 280 may receive a request of performing the function of the image forming apparatus 200 from a print control terminal (not illustrated). The control unit 280 may determine whether or not a requested function may be performed, then control the function unit 270 to perform services, if the control unit receives a command of performing functions of the image forming apparatus 200 through the user interface unit 220.

As such, the image forming apparatus 200 according to an exemplary embodiment may transmit fixed security settings to the host apparatus 100, and security settings are managed by the host apparatus 100. Therefore, a user may lessen his/her difficulty to connect each image forming apparatus repeatedly and check and take actions for the status of security settings.

FIGS. 4 to 20 are various exemplary embodiments of a user interface window which may be displayed on the user interface unit 120 of the host apparatus 100 shown in FIG. 2.

FIGS. 4 to 14 are various exemplary embodiments of a user interface window to receive fixed security settings from a user.

With reference to FIG. 4, the user interface window 400 is a UI window to set an item related to authentication among security check items. In detail, the user interface window 400 may include a section 410 which is set to indicate whether or not a security item related to authentication is to be checked, and a section 420 where a method of taking a security action is selected related to an item of authenticating security settings 421, 423 to be fixed in the concerned image forming apparatus, if an image forming apparatus violating security policy related to authentication is found during a security check. The window 400 may also indicate the machine function limit 425 of types of machine functions, such as printing, etc. The security action may be used as a security policy settings on the concerned item of security check.

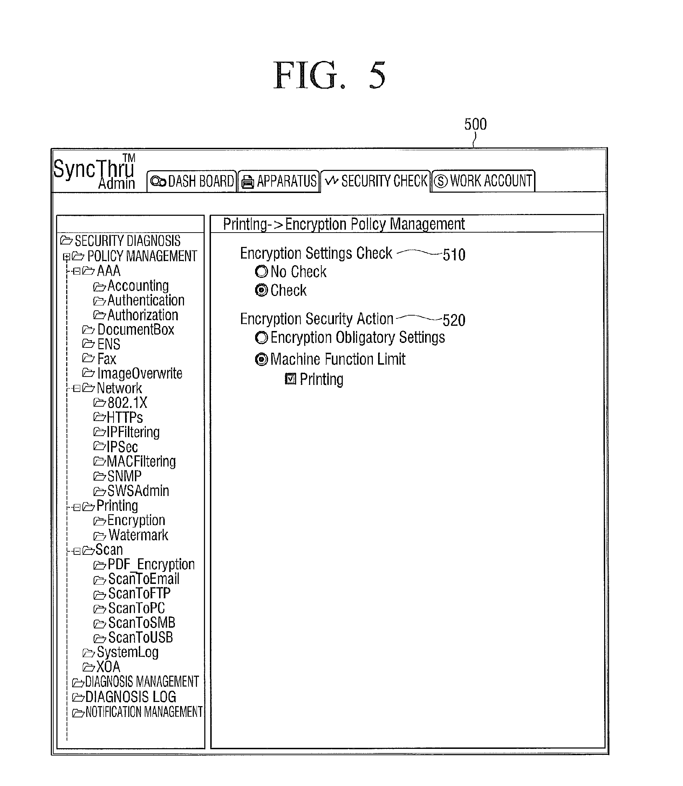

With reference to FIG.5, the user interface window 500 is a UI window to receive a fixed item related to encryption among security policy items. In detail, the user interface window 500 may include a section 510 which is set to indicate whether a security check item related to encryption is to be checked or not during a security check, and a section 520 where a method of taking a security action is selected related to an item of encryption security settings to be fixed in the concerned image forming apparatus, if an image forming apparatus violating security policy related to encryption is found during a security check.

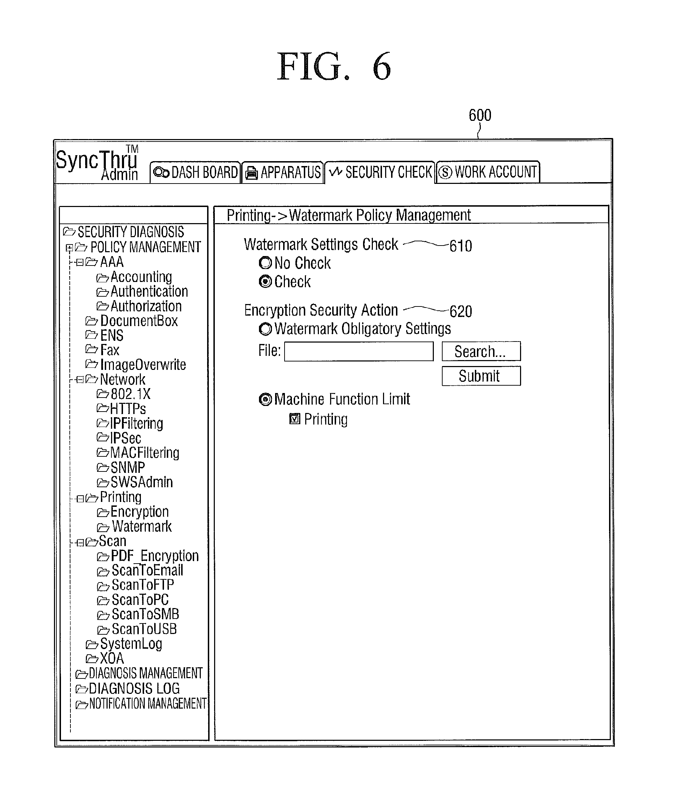

With reference to FIG. 6, the user interface window 600 is a UI window to receive a fixed item related to a watermark among security policy items. In detail, the user interface window 600 may include a section 610 which is set to indicate whether a security check item related to a watermark is to be checked or not during a security check, and a section 620 where a method of taking a security action is selected related to an item of watermark security settings to be fixed in the concerned image forming apparatus, if an image forming apparatus violating a security policy related to a watermark is found during a security check.

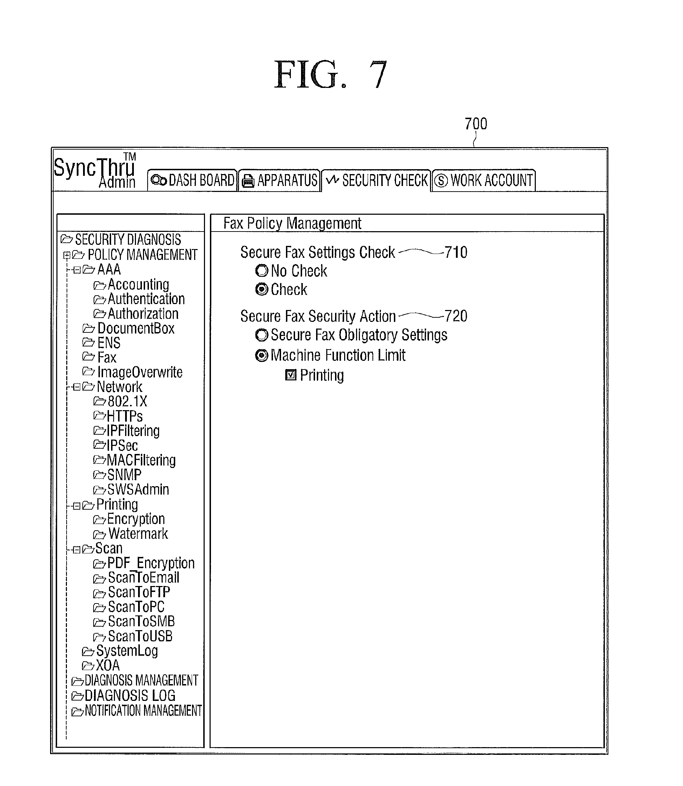

With reference to FIG. 7, the user interface window 700 is a UI window to receive a fixed item related to fax among security policy items. In detail, the user interface window 700 may include a section 710 which is set to indicate whether a security settings item related to Fax is to be checked or not during a security check, and a section 720 where a method of taking a security action is selected related to an item of fax security settings to be fixed in the concerned image forming apparatus, if an image forming apparatus violating security policy related to fax security settings is found during a security check.

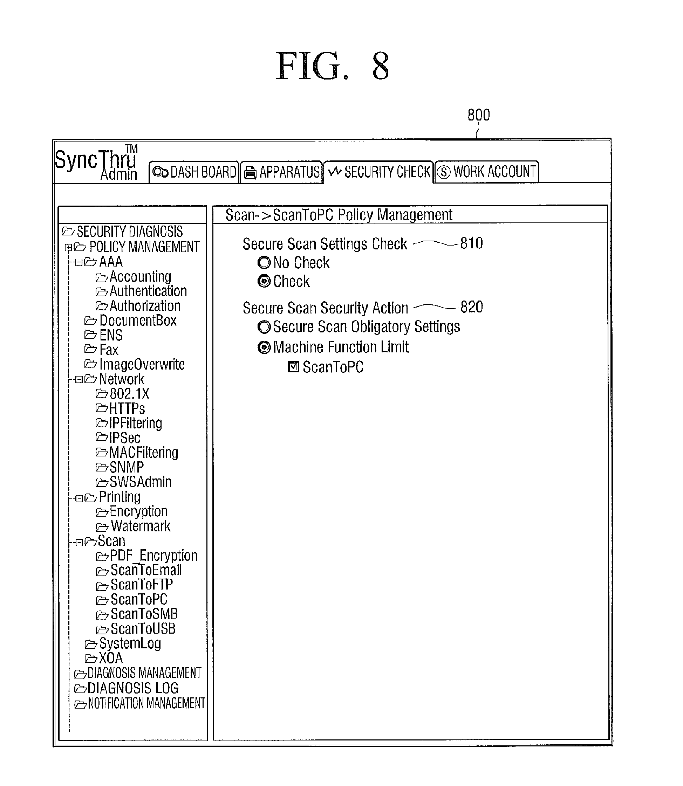

With reference to FIG. 8, the user interface unit 800 is a UI window to receive a fixed item related to scan to PC among security policy items. In detail, the user interface window 800 may include a section 810 which is set to indicate whether a security settings item related to scan to PC is to be checked or not during a security check, and a section 820 where a method of taking a security action is selected related to an item of scan to PC security settings to be fixed in the concerned image forming apparatus, if an image forming apparatus violating security policy related to scan to PC is found during a security check.

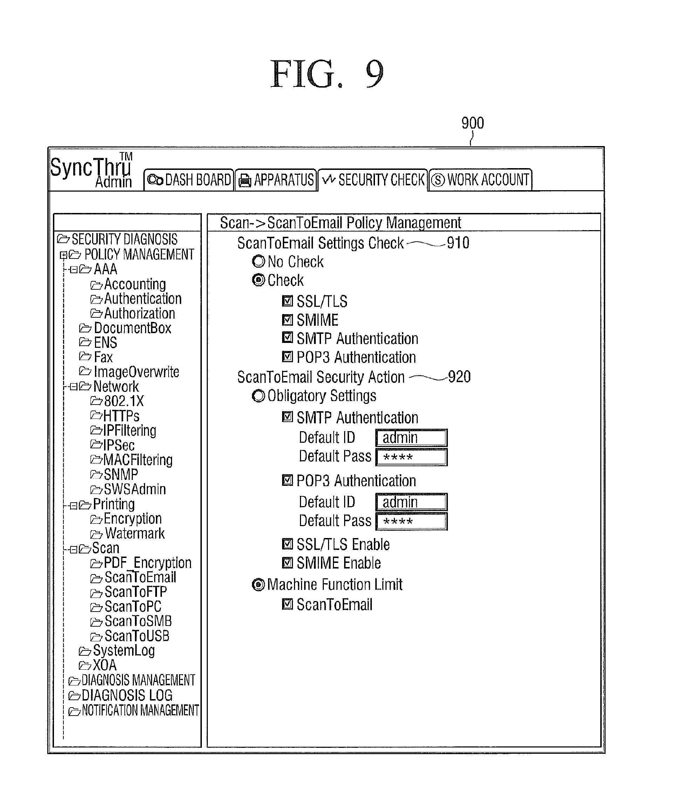

With reference to FIG. 9, the user interface window 900 is a UI window to receive a fixed item related to scan to Email among security policy items. In detail, the user interface window 900 may include a section 910 which is set to indicate whether a security settings item related to scan to Email is to be checked or not during a security check, and a section 920 where a method of taking a security action is selected related to an item of scan to Email security settings to be fixed in the concerned image forming apparatus, if an image forming apparatus violating security settings related to scan to Email is found during a security check.

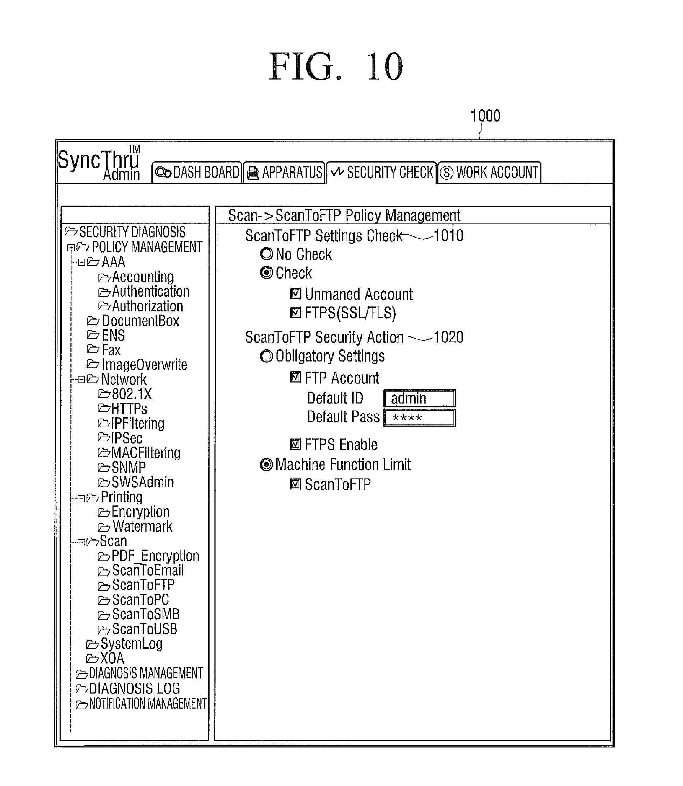

With reference to FIG. 10, the user interface window 1000 is a UI window to receive a fixed item related to scan to FTP among security policy items. In detail, the user interface window 1000 may include a section 1010 which is set to indicate whether a security settings item related to scan to FTP is to be checked or not during a security check, and a section 1020 where a method of taking a security action is selected related to an item of scan to FTP security settings to be fixed in the concerned image forming apparatus, if an image forming apparatus violating security policy related to an item of scan to FTP security settings is found during a security check.

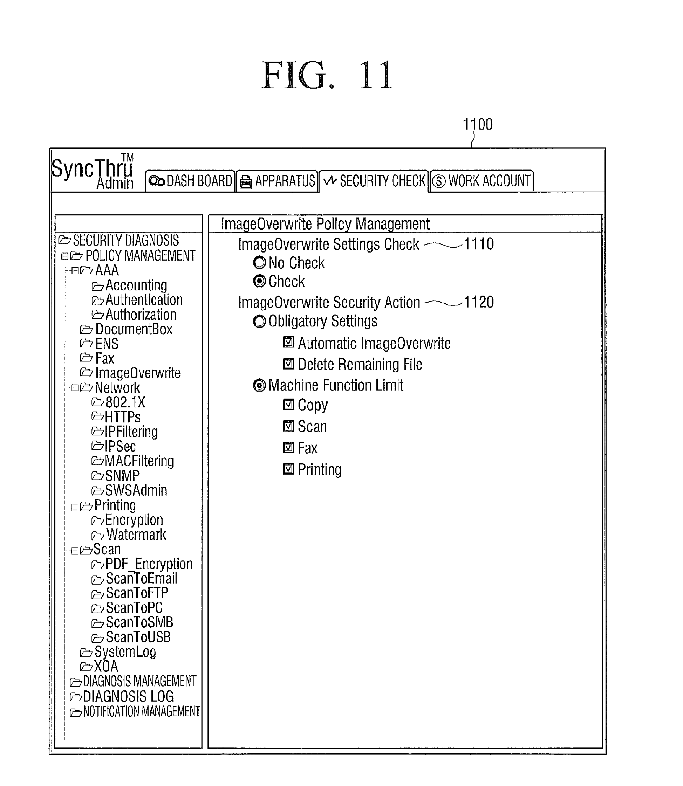

With reference to FIG.11, the user interface window 1100 is a UI window to receive a fixed item related to image Overwrite among security policy items. In detail, the user interface window 1100 may include a section 1110 which is set to indicate whether a security settings item related to image Overwrite is to be checked or not during a security check, and a section 1120 where a method of taking a security action is selected related to an item of image Overwrite security settings to be fixed in the concerned image forming apparatus, if an image forming apparatus violating security policy related to an item of image Overwrite security settings is found during a security check.

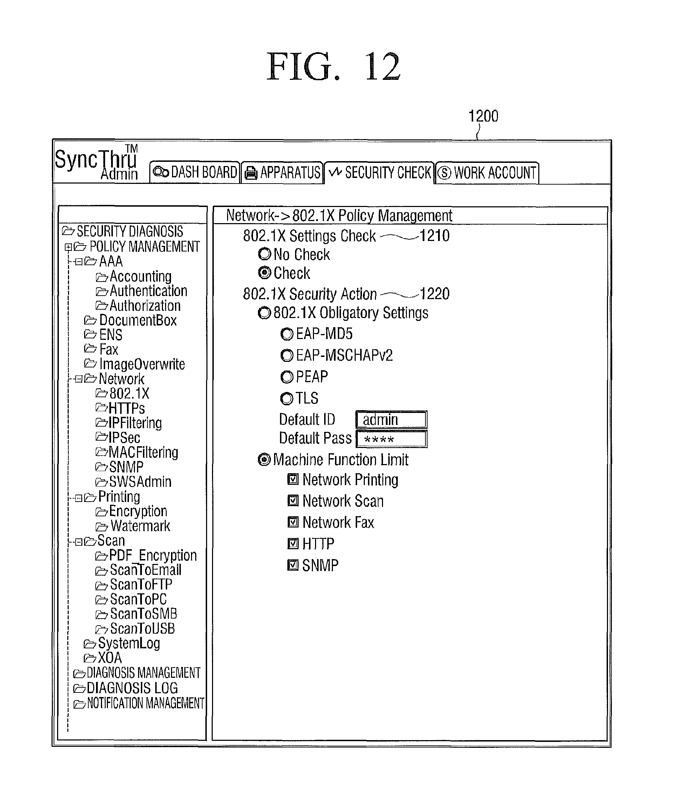

With reference to FIG.12, the user interface window 1200 is a UI window to receive a fixed item related to 802.1X among security policy items. In detail, the user interface window 1200 may include a section 1210 which is set to indicate whether a security settings item related to 802.1X security settings is to be checked or not during a security check, and a section 1220 where a method of taking a security action is selected related to an item of 802.1 X security settings to be fixed in the concerned image forming apparatus, if an image forming apparatus violating security policy related to an item of 802.1X security settings is found during a security check.

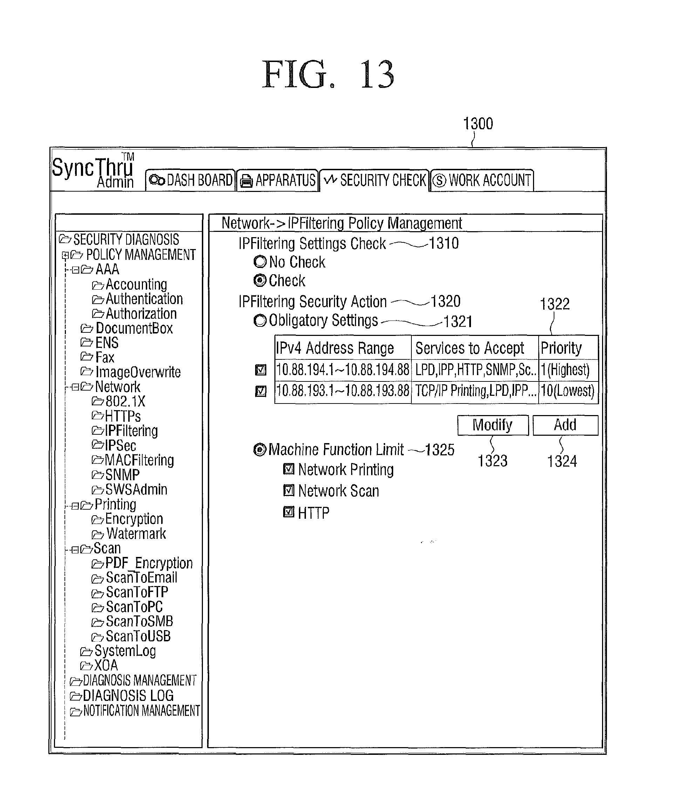

With reference to FIG. 13, the user interface window 1300 is a UI window to receive a fixed item related to IP Filtering security settings among security policy items. In detail, the user interface window 1300 may include a section 1310 which is set to indicate whether a security settings item related to IP Filtering security settings is to be checked or not during a security check, and a section 1320 where a method of taking a security action is selected related to an item of IP Filtering security settings to be fixed in the concerned image forming apparatus, if an image forming apparatus violating security policy related to an item of IP Filtering security settings is found during a security check. The IP Filtering security action section 1320 may indicate obligatory settings 1321, including a priority 1322 of an address range. The user interface window 1300 also allows for a user to modify 1323 or add 1324 settings, and also includes a machine function limit section 1325 that is set to indicate a machine function.

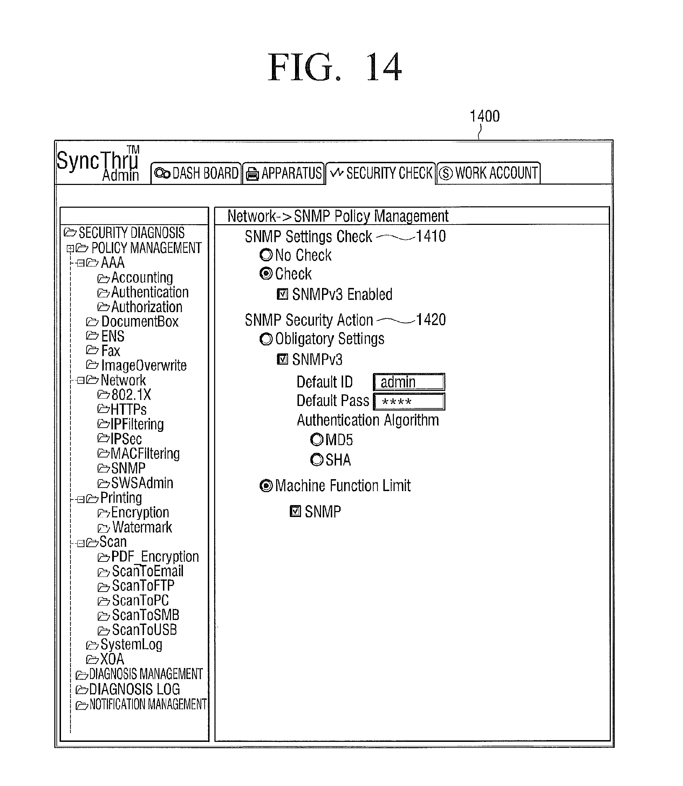

With reference to FIG. 14, the user interface window 1400 is a UI window to receive a fixed item related to Simple Network Management Protocol (SNMP) security settings among security policy items. In detail, the user interface window 1400 may include a section 1410 which is set to indicate whether a security settings item related to SNMP security settings is to be checked or not during a security check, and a section 1420 where a method of taking a security action is selected related to an item of SNMP security settings to be fixed in the concerned image forming apparatus, if an image forming apparatus violating security policy related to an item of SNMP security settings is found during a security check.

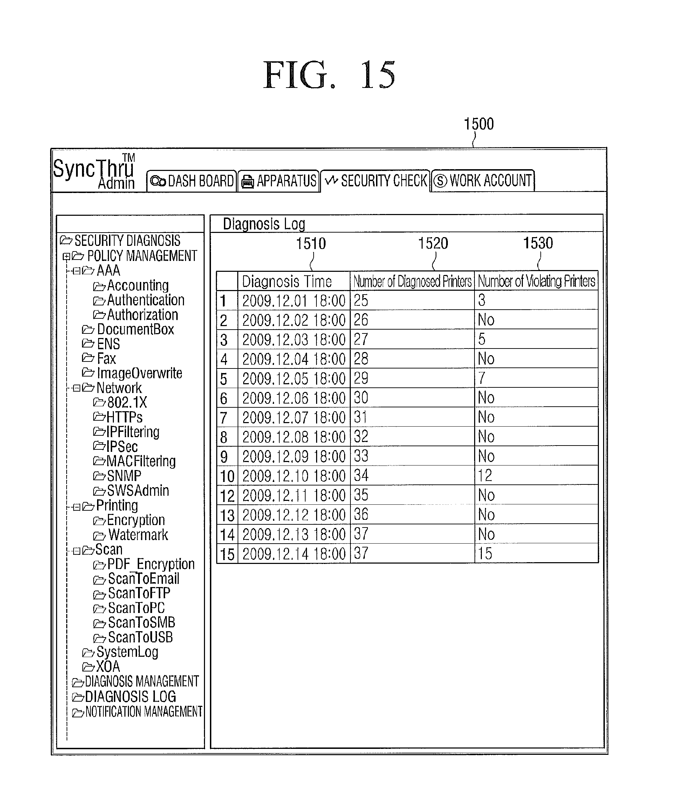

FIGS. 15 to 17 are examples of user interface windows each displaying a security check result for a user.

FIG. 15 illustrates the user interface window 1500 which displays a result of a security check for a user. In detail, the user interface window 1500 includes a section 1510 which displays a period of the security check and a section 1520 which displays the number of image forming apparatuses that performed the security check, and a section 1530 which includes the number of image forming apparatuses including an item violating the security policy. Through this process, a user or an administrator may check a result of security check on a plurality of image forming apparatuses easily.

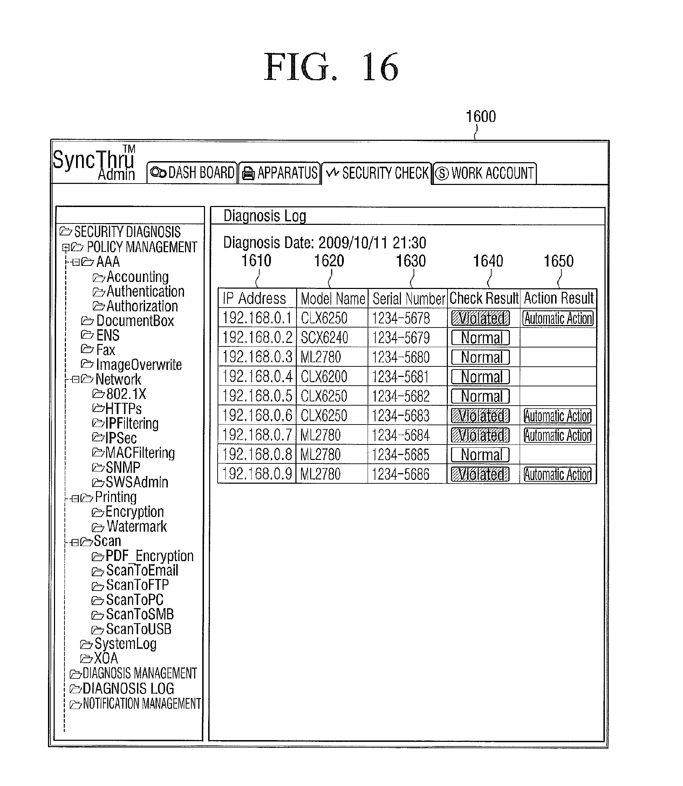

If a timing of one of the security checks is chosen, a detailed result of the security check as illustrated in FIG. 16 may be displayed.

FIG. 16 illustrates a user interface window 1600 which displays a detailed result of the security check. In detail, the user interface window 1600 includes sections 1610, 1620, 1630 which display information on a plurality of image forming apparatuses for which a security check is performed, a section 1640 which displays a result of the security check on each image forming apparatus, and a section 1650 which displays a result of security action on a security settings item violating the security policy.

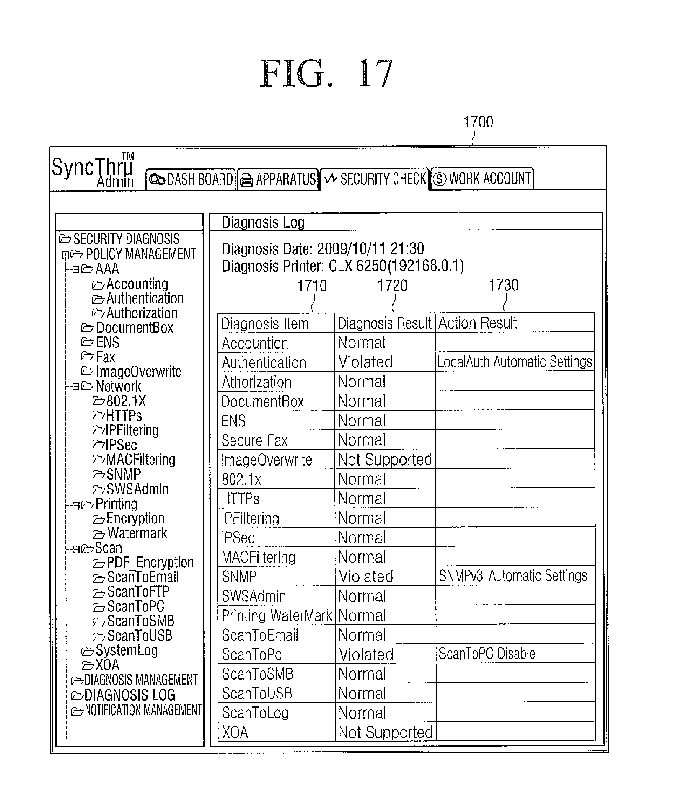

If one of the image forming apparatuses is chosen, a detailed result of the security check item as illustrated in FIG. 17 may be displayed.

FIG. 17 illustrates a user interface window 1700 which displays a detailed result of the security check. In detail, the user interface window 1700 includes a section 1710 which displays a security settings item, a section 1720 which displays a result of the security check on the concerned item, a section 1730 which displays a result of taking security action on a security settings item violating security policy. Through the process, a user may check a result of the security check on a plurality of image forming apparatuses easily.

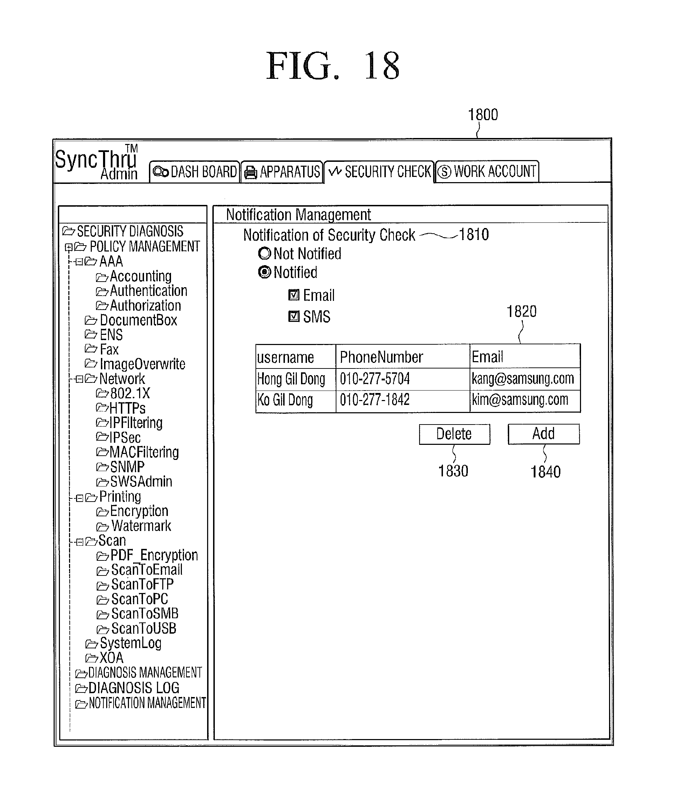

FIG. 18 is an example of a user interface window 1800 to receive a setting of obtaining a notification of a security check result. With reference to FIG. 18, the user interface window 1800 includes a section 1810 which receives a setting as to whether an administrator or a user will be notified of a result of a security check, and a section 1820 which receives a selection of an e-mail address and SMS address to receive the notification, if the result of the security check is to be notified. The user or administrator may select a 'delete' section 1830 and delete the e-mail address and SMS address set to receive the notification. The user or administrator may choose 'add' section 1840 and add the e-mail address and SMS address to receive the notification of the result of the security check.

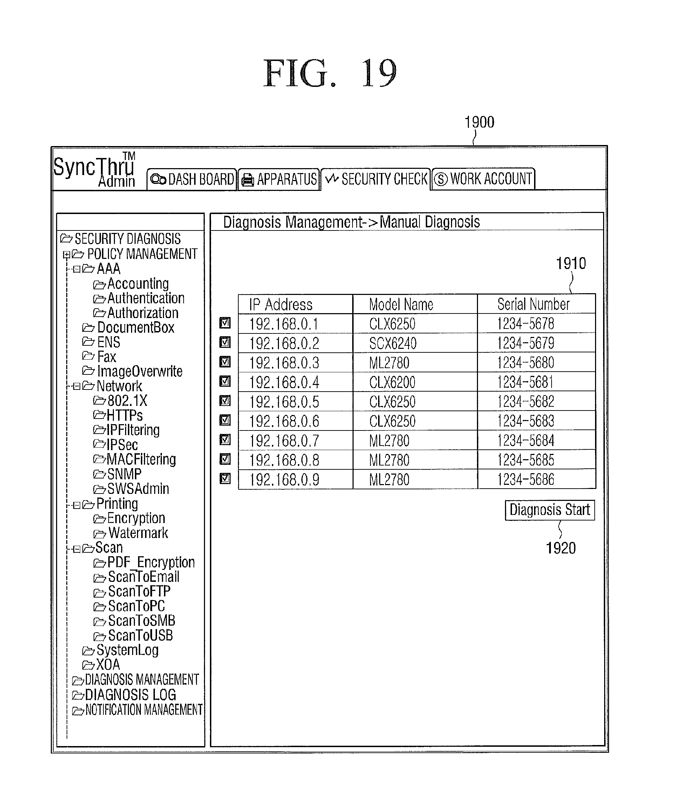

FIG. 19 is an example of a user interface window 1900 to receive an input of a manual diagnosis command. With reference to FIG. 19, the user interface window 1900 may include a section 1910 which chooses an image forming apparatus which will perform a security check, and a section 1920 which receives the security check command. Through the process, a user or an administrator may perform a security check by performing a manual diagnosis, if a security check is necessary, and change the security settings of a plurality of image forming apparatuses by performing a manual diagnosis after changing a security policy.

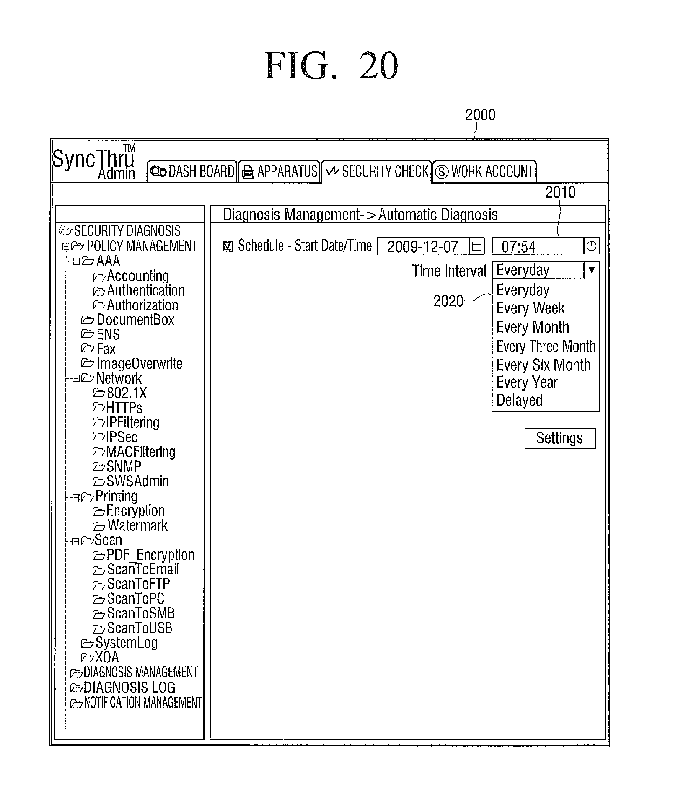

FIG. 20 is an example of a user interface window 2000 to receive time information to perform a security check. With reference to FIG. 20, the user interface window 2000 may include a section 2010 which receives an input of performing an automatic diagnosis and a section 2020 which receives an interval to perform an automatic diagnosis. The user may fix a timing and interval to perform an automatic diagnosis and perform a security check on a plurality of image forming apparatuses easily.

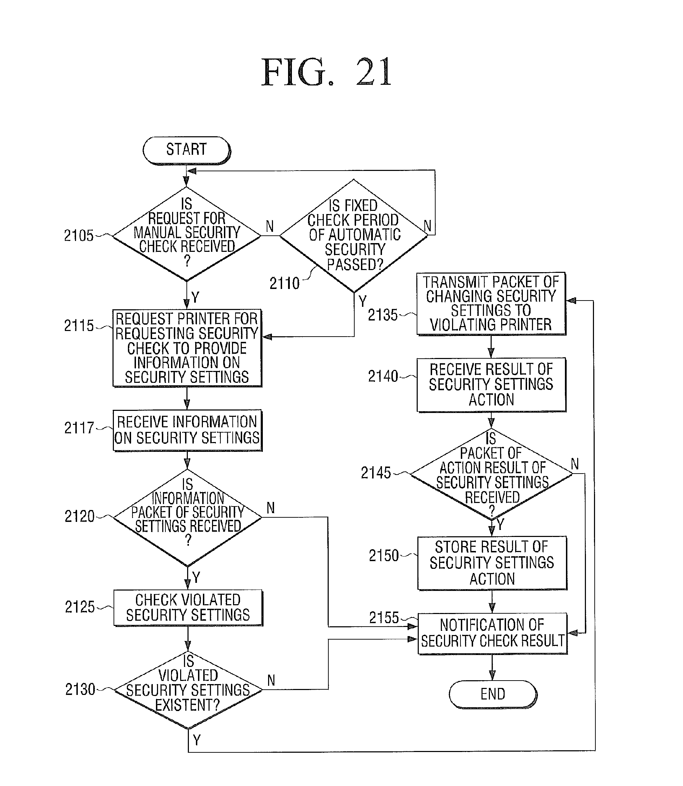

FIG. 21 is a flowchart illustrating a management method of security settings of the host apparatus according to an exemplary embodiment.

With reference to FIG. 21, a security policy on a plurality of image forming apparatuses may be set and the set policy may be stored. The security policy refers to a congregation of items of security settings to be commonly applied to a plurality of image forming apparatuses and includes an item of security settings, such as a user authentication, a job accounting, IPSec, 802.1x, security fax, IP filter, Mac Filter, SSL support and direct printing.

Moreover, the policy may determine whether a security check needs to be performed or not. In detail, the security check may be performed, if a security check request is received from a user (2105) or the check time, which is the preset timing and perform to perform a security check, included in the security policy has passed (2110).

If the security check is performed, information for security settings on a plurality of image forming apparatuses to perform a security check may be requested (2115). In response to the request, security settings information may be received from the image forming apparatuses (2117). It is determined whether a packet of security settings is received (2120). If a packet of security settings is not received, the result is displayed through a user interface window and notified to an administrator (2155).

If the packet of security settings is received, a security check may be performed by comparing the security settings information received from each of the image forming apparatuses with the stored security policy (2125). In detail, an image forming apparatus violating an extracted security settings item may be searched by comparing the security settings information received from each of the image forming apparatuses with the extracted item of security settings from the security policy, and determining whether violated security settings are existent (2130).

If no image forming apparatus violates the security policy as a result of the security check, the result of security check may be displayed through the user interface window and may be notified to an administrator through an e-mail or a text message (2155). The result of the security check may be stored in a log form.

On the other hand, if an image forming apparatus violating the security check is found, a packet of changing security settings to change the security settings item violating security policy may be transmitted to the concerned image forming apparatus (2135). In response to the transmission, a result of security settings action may be received from the image forming apparatuses (2140). It is determined whether a packet of the result of security settings action is received (2145). If a packet of the result of security settings action is not received, the result is displayed through a user interface window and notified to an administrator (2155).

If a changed result of security settings is notified from the concerned image forming apparatus (2140), a result of security action is stored (2150) and the result may be notified to the administrator (2155). On the other hand, if a changed result of security settings is not notified from the concerned image forming apparatus, the packet of changing security settings may be transmitted to the concerned image forming apparatus repeatedly. If the changed result of security settings is not notified even though the packet of changing security settings is sent to the concerned image forming apparatus repeatedly, a result of failing to take security action may be stored and the result may be notified to the administrator.

Accordingly, a method of managing security settings of the host apparatus may perform a security check on a plurality of image forming apparatuses in a comprehensive way and perform a security action automatically in response to a result of the security check. Even if a security policy on a plurality of image forming apparatuses is changed, a user or an administrator may change only a security policy in the host apparatus and change the security settings on the plurality of image forming apparatuses easily. A method of setting security settings such as in FIG. 21 may be performed in a host apparatus which has the same configuration of FIG. 2 and be also performed in a host apparatus which has another configuration.

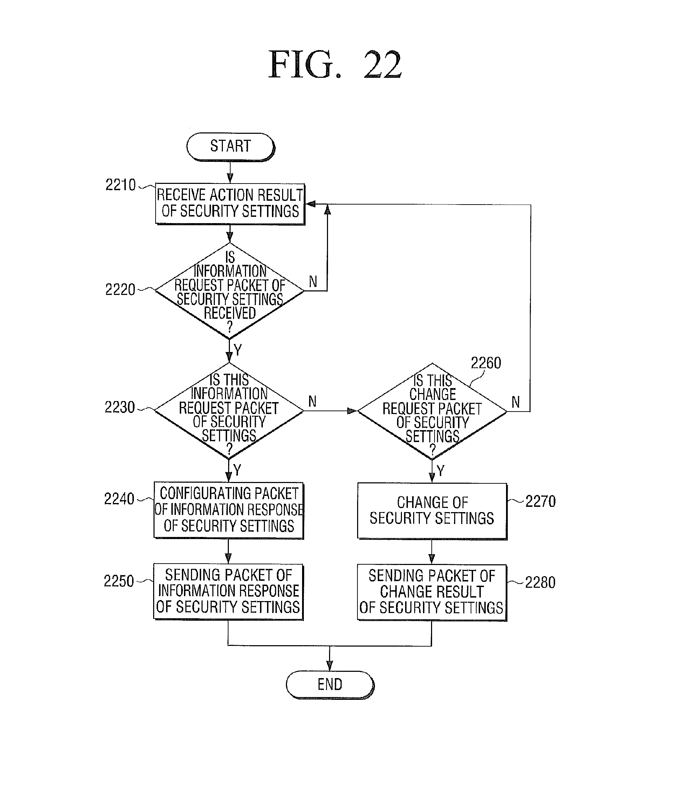

FIG. 22 is a flowchart to explain a method of managing security settings of an image forming apparatus according to an exemplary embodiment.

Security settings of the image forming apparatus 200 may be stored in advance. In detail, the security settings of the image forming apparatus 200 may be fixed by a user through the user interface window and be fixed automatically according to a security policy received from the host apparatus 100. A user may change a part of a security settings item among the received security policy.

An action result of security settings is received from the host apparatus 2210. It is determined whether the information request that is received from the host apparatus is a packet of security settings (2220), and the type of the received packet of security settings may be determined. In detail, a packet of security settings may be an information request packet of security settings and a change packet of security settings. Therefore, it is distinguishable whether the received packet of security settings is an information request packet of security settings (2230) or the received packet of security settings is a change packet of security settings (2260).

If the received packet of security settings is an information request of security settings, an information response packet of security settings including security settings information of the image forming apparatus 200 may be generated (2240) and the generated information response packet of security settings, i.e., the security settings information, may be transmitted to the host apparatus 100 (2250).

On the other hand, if the received packet of security settings is a change packet of security settings, security settings information may be changed according to the received change packet of security settings (2270). In detail, according to the received change packet of security settings, a security settings item violating security policy may be changed into a security settings item according to the received change packet of security settings. The changed result of security settings may be transmitted to the host apparatus 100 (2280).

Accordingly, the method of managing the image forming apparatus transmits security settings information set in the image forming apparatus 200 to the host apparatus 100 and security settings are managed through the host apparatus 100. Therefore, an administrator may lessen his/her difficulty to check and take actions for the status of security settings of each of the image forming apparatuses repeatedly. A method of managing security settings in FIG. 22 may be performed in an image forming apparatus which has the same configuration of FIG. 3 and also be performed in an image forming apparatus which has another configuration.

One or more of units/hardware described in the application, for example, the security settings management unit, may be executed on a processing device or may be implemented as hardware device. The units may also be configured to act as one or more software modules in order to perform the operations of the above-described embodiments and may cause a general purpose computer or processor or a particular machine to perform any of the operations discussed above.

Aspects of the at least one embodiment can also be embodied as computer-readable codes on a computer-readable medium, where the computer readable medium can cause a processor to perform operations, for example. Also, codes and code segments to accomplish the present at least one embodiment can be easily construed by programmers skilled in the art to which the present invention pertains. The computer-readable medium may be a computer-readable storage medium, which is any data storage device that can store data which can be thereafter read by a computer system or computer code processing apparatus. Examples of the computer-readable storage medium include read-only memory (ROM), random-access memory (RAM), CD-ROMs, magnetic tapes, floppy disks, and optical data storage devices. The computer-readable medium can also be distributed over net-work-coupled computer systems so that the computer-readable code is stored and executed in a distributed fashion.

The foregoing exemplary embodiments and advantages are merely exemplary and are not to be construed as limiting the present invention. The present teaching may be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A host apparatus connectable to at least one of a plurality of image forming apparatuses, the host apparatus comprising:
a user interface unit through which a security policy for at least one of the image forming apparatuses is set;
a storage unit which stores the set security policy;
a communications interface unit which requests security settings for at least one of the image forming apparatuses and receives corresponding security settings information from at least one of the image forming apparatuses; and
a control unit which performs a security check on at least one of the image forming apparatuses by comparing the security settings information received from the at least one image forming apparatus with the stored security policy.

2. The host apparatus according to claim 1, further comprising:
a security settings action unit which transmits a packet of changing security settings to change a violated security settings item to an image forming apparatus violating the stored security policy when it is determined that at least one security settings item of an image forming apparatus violates the stored security policy according to the security check result of the at least one image forming apparatus.

3. The host apparatus according to claim 1 or claim 2, wherein the user interface unit displays a security check result of the at least one image forming apparatus.

4. The host apparatus according to any one of claim 1 to claim 3, further comprising:
a security check result announcement unit, which notifies a security check result of at least one of the image forming apparatuses to an administrator.

5. The host apparatus according to any one of claim 1 to claim 4, further comprising:
a security policy management unit which extracts the at least one security settings item to conduct a security check according to the stored security policy, and wherein the control unit performs a security check on at least one of the image forming apparatuses by comparing the extracted security settings item with the security settings information received from the at least one image forming apparatus.

6. The host apparatus according to any one of claim 1 to claim 5, wherein the security policy comprises time information to perform a security check, and the control unit performs a security check on at least one of the image forming apparatuses according to the time information.

7. The host apparatus according to any one of claim 1 to claim 6, wherein the security policy comprises at least one of security settings items among a user authentication, a job accounting, an IPSec, a 802.1x, a security fax, an IP filter, a Mac filter, an SSL support and a direct printing.

8. An image forming apparatus connected to a host apparatus, the image forming apparatus comprising:
a storage unit which stores security settings information of the image forming apparatus;
an image forming unit which performs an image forming job;
a function management unit which controls functions of the image forming unit according to the stored security settings information;
a communications interface unit which is connected to the host apparatus;
and
a security settings management unit which transmits the stored security settings information to the host apparatus through the communications interface unit, and changes the stored security settings information according to a received packet of changing security settings, when a packet of changing security settings is received from the host apparatus through the communications interface unit.

9. The image forming apparatus according to claim 8, wherein the security settings management unit transmits the stored security settings information to the host apparatus through the communications interface unit, if an information request packet of security settings is received from the host apparatus through the communications interface unit.

10. The image forming apparatus according to claim 8 or claim 9, wherein the security settings management unit transmits the stored security settings information regularly to the host apparatus through the communications interface unit.

11. The image forming apparatus according to any one of claim 8 to claim 10, wherein the security settings management unit transmits a changed result of the security settings through the communications interface unit.

12. A method of managing security settings of at least one of a plurality of image forming apparatuses from a host apparatus connected to the at least one image forming apparatus, the method comprising:
receiving input to set a security policy for at least one of the image forming apparatuses;
storing the set security policy in the host apparatus;
receiving corresponding security settings information after requesting security settings of the at least one image forming apparatus; and
performing a security check on the at least one image forming apparatus by comparing the security settings information received from the at least one image forming apparatuses with the stored security policy.

13. A method of managing a security policy of an image forming apparatus connected to a host apparatus, the method comprising:
receiving a security settings packet from the host apparatus;
determining a type of the received security settings packet;
changing the security settings information of the image forming apparatus according to the received security settings packet when the received security settings packet is determined to be a packet of changing security settings; and
performing functions of the image forming apparatus according to the changed security settings information.
